# EUROPÄISCHE PATENTSCHRIFT

(11) **EP 2 098 929 B1**
(45) Veröffentlichungstag und Bekanntmachung des Hinweises auf die Patenterteilung: **14.09.2011**
(21) Anmeldenummer: 08004287.2
(22) Anmeldetag: 07.03.2008
(51) Int. Cl.: G05B 19/406

(54) **Betriebsverfahren für eine mittels eines elektrischen Antriebs angetriebene Maschine mit Zustandserkennung durch Frequenzanalyse**
Method of operating a machine powered by an electric drive with status recognition by means of frequency analysis
Procédé de fonctionnement pour une machine entraînée à l'aide d'un entraînement électrique dotée d'une reconnaissance d'état par l'intermédiaire de l'analyse de fréquence

(43) Veröffentlichungstag der Anmeldung: 09.09.2009
(73) Patentinhaber: SIEMENS AKTIENGESELLSCHAFT, 80333 München (DE)
(72) Erfinder: Gebert, Karl, Dr., 97424 Schweinfurt (DE)

(56) Entgegenhaltungen:
- DE-A1- 10 144 076
- DE-A1- 19 545 008
- DE-A1-102007 034 344

## Beschreibung

Die vorliegende Erfindung betrifft ein Betriebsverfahren für eine mittels eines Antriebs angetriebene Maschine,
- wobei der Antrieb von einer Steuereinrichtung der Maschine über mindestens ein Stellglied an eine Energieversorgung anschaltbar ist,
- wobei der Antrieb in der Lage ist, beim Anschalten an die Energieversorgung aus dem Stand anzulaufen,
- wobei mittels eines Sensors ein zeitabhängiges Signal erfasst wird,
- wobei das zeitabhängige Signal an die Steuereinrichtung übermittelt wird.

Die vorliegende Erfindung betrifft weiterhin ein Computerprogramm, das Maschinencode umfasst, der von einer Steuereinrichtung für eine mittels eines Antriebs angetriebene Maschine unmittelbar ausführbar ist, wobei die Ausführung des Maschinencodes bewirkt, dass die Steuereinrichtung den Antrieb über mindestens ein Stellglied an eine Energieversorgung anschaltet und von einem Sensor der Maschine ein zeitabhängiges Signal entgegen nimmt.

Weiterhin betrifft die vorliegende Erfindung einen Datenträger, auf dem in maschinenlesbarer Form ein derartiges Computerprogramm gespeichert ist.

Weiterhin betrifft die vorliegende Erfindung eine Steuereinrichtung für eine mittels eines Antriebs angetriebene Maschine, wobei die Steuereinrichtung mit einem derartigen Computerprogramm programmiert ist, so dass sie in der Lage ist, im Betrieb den Antrieb über mindestens ein Stellglied an eine Energieversorgung anzuschalten und von einem Sensor der Maschine ein zeitabhängiges Signal entgegen zu nehmen. Schließlich betrifft die vorliegende Erfindung eine Maschine, die einen Antrieb, eine Steuereinrichtung und einen Sensor aufweist,
- wobei die Maschine mittels des Antriebs antreibbar ist,
- wobei der Antrieb von der Steuereinrichtung über mindestens ein Stellglied an eine Energieversorgung anschaltbar ist,
- wobei der Antrieb in der Lage ist, beim Anschalten an die Energieversorgung aus dem Stand anzulaufen,
- wobei mittels des Sensors ein zeitabhängiges Signal erfassbar und an die Steuereinrichtung übermittelbar ist.

Die oben genannten Gegenstände sind allgemein bekannt. Typische Beispiele entsprechender Maschinen sind Bohrmaschinen, Drehmaschinen, Kreis- und Bandsägen sowie andere Maschinen. Der Antrieb ist in vielen Fällen ein rotierender Antrieb. In manchen Fällen kann der Antrieb jedoch als Linearantrieb ausgebildet sein.

Maschinen weisen in der Regel viele einzelne Komponenten auf. Manche der Komponenten sind starr, andere beweglich, werden jedoch meist nicht bewegt und wieder andere im Normalzustand bewegt. Beispiele starrer Komponenten sind der Grundkörper der Maschine und die Verkleidung der Maschine. Ein Beispiel einer selten bewegten Komponente ist eine Abdeckhaube, mittels derer ein Bearbeitungsbereich der Maschine abgedeckt wird. Bewegliche Teile sind beispielsweise Wellen, Lager und Spindeln.

Die einzelnen Komponenten der Maschine unterliegen Verschleiß und anderen zeitlichen Veränderungen. Manche dieser Veränderungen sind harmlos, manche kritisch, manche erfordern einen sofortigen Eingriff in den Betriebsablauf, um Folgeschäden zu vermeiden.

Es ist bekannt, Sensoren vorzusehen, um kritische Komponenten zu überwachen. Beispielsweise werden in der Nähe von Wälzlagern Temperatursensoren angeordnet, um Wälzlagerschäden möglichst früh erkennen zu können. Auch die Verwendung von Beschleunigungssensoren, von Abstandssensoren oder von Drucksensoren ist bekannt. Anhand der von dem verwendeten Sensor ermittelten Sensorsignale - insbesondere anhand von deren zeitlicher Änderung - und von vorgegebenen Grenzwerten ist es in vielen Fällen möglich, Rückschlüsse auf den Zustand von Wälzlagern oder anderen Komponenten der Maschine zu ziehen.

Die Vorgehensweise des Standes der Technik weist verschiedene Nachteile auf.

So sind beispielsweise die verwendeten Sensoren und insbesondere die verwendeten Auswerteschaltungen oftmals teuer. Weiterhin ist es oftmals schwierig, die Sensoren und die Auswerteschaltungen in die Maschine oder in den elektrischen Antrieb zu integrieren. Weiterhin sind die Sensoren oftmals störungsanfällig. Auch gestaltet sich die Signalübertragung oftmals schwierig. Weiterhin reicht in vielen Fällen ein einzelnes Signal zum eindeutigen und sicheren Beschreiben des Systemzustands nicht aus. Weiterhin ist die Einkopplung von externen Sensorsignalen oder von Signalen von Auswerteschaltungen in eine numerische Steuerung oder in einen Umrichter in vielen Fällen mit erheblichem Aufwand verbunden und darüber hinaus aus systemtechnischen Gründen unerwünscht. Weiterhin verhindern Störungen und andere Prozesseinflüsse während des Betriebs oftmals eine eindeutige Auswertung der erfassten Signale. Schließlich sind sinnvolle und aussagekräftige Grenzwerte für das Ermitteln von Verschleißzuständen nicht immer sicher bestimmbar, da die einzelnen Komponenten der Maschine miteinander in Wechselwirkung stehen.

Aus der DE 10 2007 034 344 A1 ist ein Betriebsverfahren für eine mittels eines Antriebs angetriebene Maschine bekannt. Bei diesem Betriebsverfahren ist der Antrieb von einer Steuereinrichtung über ein Stellglied an eine Energieversorgung anschaltbar. Der Antrieb wird von der Steuereinrichtung derart an die Energieversorgung angeschaltet, dass der Antrieb die Maschine direkt oder indirekt über einen Frequenzbereich zu Vibrationen anregt. Mittels eines Sensors wird ein zeitabhängiges Signal erfasst, das für angeregte Vibrationen charakteristisch ist. Das zeitabhängige Signal wird an die Steuereinrichtung übermittelt, welche eine Frequenzanalyse des zeitabhängigen Signals vornimmt. Anhand der Frequenzanalyse wird ein Zustand mindestens eines Elements der Maschine ermittelt.

Die Aufgabe der vorliegenden Erfindung besteht darin, Möglichkeiten zu schaffen, auf kostengünstige, einfache und eindeutige Weise den Zustand von Wälzlagern und anderen Komponenten der Maschine ermitteln zu können.

Die Aufgabe wird verfahrenstechnisch durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 6.

Erfindungsgemäß wird der Antrieb von einer Steuereinrichtung der Maschine über mindestens ein Stellglied an eine Energieversorgung angeschaltet, so dass der Antrieb die Maschine direkt oder indirekt über einen Frequenzbereich zu Vibrationen anregt. Mittels eines Sensors wird ein zeitabhängiges Signal erfasst, das für angeregte Vibrationen charakteristisch ist. Das zeitabhängige Signal wird an die Steuereinrichtung übermittelt. Von der Steuereinrichtung wird eine Frequenzanalyse des zeitabhängigen Signals vorgenommen. Die Frequenzanalyse wird von der Steuereinrichtung zu der Vibrationsanregung in Bezug gesetzt und daraus ein Zustand mindestens eines Elements der Maschine ermittelt. In Abhängigkeit von dem ermittelten Zustand wird von der Steuereinrichtung eine Meldung an einen Bediener der Maschine ausgegeben. Zur Vibrationsanregung wird der Antrieb von der Steuereinrichtung mit einer Störgröße beaufschlagt werden, die mindestens eine innerhalb des Frequenzbereichs liegende Frequenz aufweist. Es ist möglich, dass die Störgröße eine sinusförmige Störgröße ist, deren Frequenz den Frequenzbereich durchläuft. Diese Ausgestaltung des Betriebsverfahrens führt zu besonders zuverlässigen Auswertungen. Alternativ ist es möglich, dass die Störgröße eine pseudobinäre Störgröße ist, deren Spektrum den Frequenzbereich abdeckt. Diese Vorgehensweise hat den Vorteil, dass sie auch im Normalbetrieb der Maschine anwendbar ist.

Wenn beispielsweise der Antrieb als elektrischer Drehstromantrieb ausgebildet ist, ist es möglich, eine asymmetrische Bestromung vorzunehmen oder eine geeignete Anregung auf das normale Antriebssignal des Antriebs aufzuschalten. Die Maschine führt in diesem Fall, abhängig von der Anregung, charakteristische Vibrationen aus. Diese können durch einen entsprechenden Sensor erfasst und von der Steuereinrichtung ausgewertet werden.

Unter dem Begriff "Vibration" ist eine oszillierende mechanische Bewegung mindestens eines Elements der Maschine zu verstehen, die keine Nutzbewegung der Maschine ist. Wenn beispielsweise der Antrieb eine Welle und über die Welle einen Kolben antreibt, sind die Drehung der Welle und das Verschieben des Kolbens die Nutzbewegungen der Maschine, alle anderen oszillierenden mechanischen Bewegungen sind Vibrationen. Die Vibration kann mono- oder multifrequent sein.

Es wird also im Ergebnis die Übertragungsfunktion der Maschine ermittelt und ausgewertet. Die Übertragungsfunktion beschreibt das Verhalten der Maschine auf eine Anregung, d. h. das Verhältnis zwischen einer Ausgangsgröße oder Systemantwort (angeregte Vibrationen) und einer Eingangsgröße oder Systemanregung (Ansteuerung der elektrischen Maschine). Die Übertragungsfunktion bildet ein System vollständig ab. Aus dem Übertragungsverhalten eines Systems können folglich Rückschlüsse auf den Zustand einzelner Komponenten des Systems gezogen werden. Weiterhin ermöglichen Übertragungsfunktionen immer zugleich eine zuverlässige Beurteilung des Gesamtverhaltens.

Durch die erfindungsgemäße Vorgehensweise ist somit eine Überwachung und Diagnose der Maschine möglich. Das Anregungssignal kann direkt vom Antrieb generiert werden. Es ist keinerlei externe Anregung erforderlich.

Der Antrieb kann wahlweise als elektrischer, hydraulischer oder pneumatischer Antrieb ausgebildet sein. Meist ist er als elektrischer Antrieb ausgebildet.

Es ist möglich, dass das mindestens eine Stellglied von der Steuereinrichtung nur binär geschaltet wird. Alternativ kann das mindestens eine Stellglied von der Steuereinrichtung proportional angesteuert werden.

Der Sensor kann prinzipiell beliebig ausgestaltet sein, wenn er nur geeignet ist, das entsprechende Signal zu erfassen. Beispielsweise kann der Sensor als Wegsensor, als Geschwindigkeitssensor, als Beschleunigungssensor, als Kraftsensor oder als Drucksensor ausgebildet sein.

In Einzelfällen kann es ausreichend sein, wenn das vom Sensor erfasste Signal nur für die Amplitude der angeregten Vibrationen oder nur für die Phasenlage der angeregten Vibrationen charakteristisch ist. Im Regelfall wird jedoch das vom Sensor erfasste Signal für die Amplitude und für die Phasenlage der angeregten Vibrationen charakteristisch sein.

Im Regelfall werden von der Steuereinrichtung Amplitude und/oder Phasenlage der angeregten Vibrationen in Bezug zu Amplitude und/oder Phasenlage der Vibrationsanregung gesetzt. Hieraus wird sodann der Zustand des mindestens einen Elements der Maschine ermittelt.

Die Aufgabe wird weiterhin programmtechnisch durch ein Computerprogramm mit den Merkmalen des Anspruchs 7 gelöst.

Erfindungsgemäß umfasst das Computerprogramm Maschinencode, der von einer Steuereinrichtung für eine mittels eines Antriebs angetriebene Maschine unmittelbar ausführbar ist. Die Ausführung des Maschinencodes bewirkt, dass die Steuereinrichtung
- den Antrieb derart über mindestens ein Stellglied an eine Energieversorgung anschaltet, dass der Antrieb die Maschine direkt oder indirekt über einen Frequenzbereich zu Vibrationen anregt,
- von einem Sensor der Maschine ein zeitabhängiges Signal entgegen nimmt, das für angeregte Vibrationen charakteristisch ist,
- eine Frequenzanalyse des zeitabhängigen Signals vornimmt,
- die Frequenzanalyse zu der Vibrationsanregung in Bezug setzt und daraus einen Zustand mindestens eines Elements der Maschine ermittelt,
- in Abhängigkeit von dem ermittelten Zustand eine Meldung an einen Bediener der Maschine ausgibt und
- zur Vibrationsanregung den Antrieb mit einer Störgröße beaufschlagt, die mindestens eine innerhalb des Frequenzbereichs liegende Frequenz aufweist.

Die Störgröße kann die obenstehend beschriebenen Formen aufweisen.

Vorzugsweise bewirkt die Ausführung des Maschinencodes, dass die Steuereinrichtung zusätzlich eine der vorteilhaften Ausgestaltungen des Betriebsverfahrens realisiert.

Weiterhin wird die vorliegende Erfindung durch einen Datenträger gelöst, auf dem in maschinenlesbarer Form ein derartiges Computerprogramm gespeichert ist.

Weiterhin wird die Aufgabe einrichtungstechnisch durch eine Steuereinrichtung für eine mittels eines Antriebs angetriebene Maschine gelöst, wobei die Steuereinrichtung mit einem Computerprogramm der obenstehend beschriebenen Art programmiert ist, so dass sie in der Lage ist, im Betrieb die entsprechenden Verfahrensschritte auszuführen.

Die Steuereinrichtung der Maschine ist vorzugsweise derart ausgebildet, dass sie in der Lage ist, im Betrieb eine der vorteilhaften Ausgestaltungen des Betriebsverfahrens auszuführen.

Schließlich wird die Aufgabe durch eine Maschine gelöst,
- wobei die Maschine einen Antrieb, eine Steuereinrichtung und einen Sensor aufweist,
- wobei die Maschine mittels des Antriebs antreibbar ist,
- wobei der Antrieb von der Steuereinrichtung über mindestens ein Stellglied an eine Energieversorgung anschaltbar ist, so dass der elektrische Antrieb die Maschine direkt oder indirekt über einen Frequenzbereich zu Vibrationen anregt,
- wobei der Antrieb in der Lage ist, beim Anschalten an die Energieversorgung aus dem Stand anzulaufen,
- wobei mittels des Sensors ein zeitabhängiges Signal erfassbar und an die Steuereinrichtung übermittelbar ist, das für angeregte Vibrationen charakteristisch ist,
- wobei von der Steuereinrichtung eine Frequenzanalyse des zeitabhängigen Signals vornehmbar ist, die Frequenzanalyse zu der Vibrationsanregung in Bezug setzbar ist, daraus ein Zustand mindestens eines Elements der Maschine ermittelbar ist und in Abhängigkeit von dem ermittelten Zustand eine Meldung an einen Bediener der Maschine ausgebbar ist,
- wobei, wie bereits zuvor beschrieben, eine Beaufschlagung mit einer entsprechenden Störgröße erfolgt.

Weitere Vorteile und Einzelheiten ergeben sich aus der nachfolgenden Beschreibung eines Ausführungsbeispiels in Verbindung mit den Zeichnungen. Es zeigen in Prinzipdarstellung:
- FIG 1: schematisch den Aufbau einer Maschine,
- FIG 2: ein Ablaufdiagramm und
- FIG 3: mögliche Arten der Vibrationsanregung.

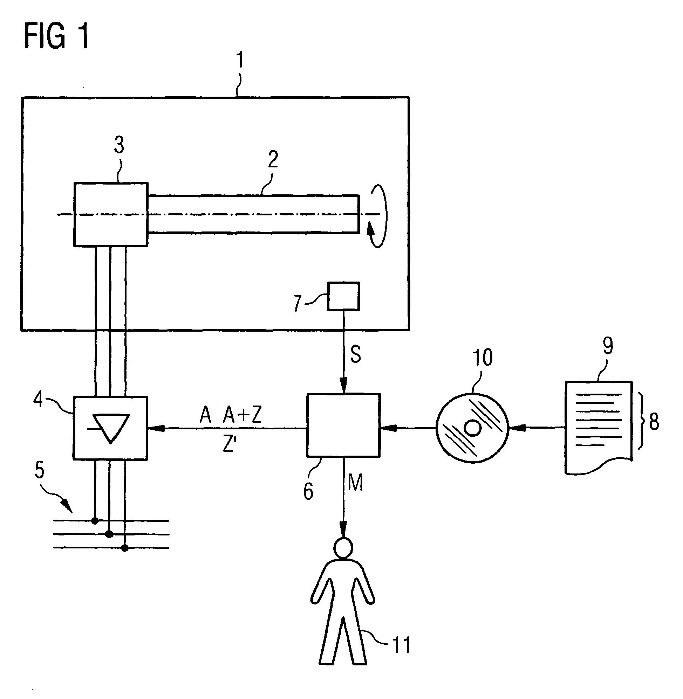

Gemäß FIG 1 weist eine Maschine einen Grundkörper 1 und eine im Grundkörper 1 drehbar gelagerte Welle 2 auf, beispielsweise eine Spindelwelle einer Drehmaschine. Die Spindelwelle 2 (bzw. allgemeiner die Maschine) ist mittels eines elektrischen Antriebs 3 antreibbar. Der elektrische Antrieb 3 ist in der Regel ein dreiphasiger Drehstrommotor, der über einen Umrichter 4 aus einem Stromnetz 5 gespeist wird.

Die obenstehend erläuterte Ausgestaltung der Maschine ist rein beispielhaft. So muss die Maschine beispielsweise nicht als Drehmaschine ausgebildet sein, sondern es könnte sich um eine andere Maschine handeln. Auch muss der Antrieb 3 kein Drehstromantrieb sein, sondern es kann sich um einen anderen elektrischen Antrieb handeln. Es muss, genau genommen, der Antrieb 3 nicht einmal als elektrischer Antrieb ausgebildet sein. Er könnte auch als hydraulischer oder als pneumatischer Antrieb ausgebildet sein. Entscheidend ist, dass der Antrieb 3 in der Lage ist, aus dem Stand anzulaufen, wenn er über den Umrichter 4 (oder ein anderes geeignetes Stellglied bzw. eine entsprechende Gruppe von Stellgliedern) an das Stromnetz 5 (bzw. allgemeiner eine Energieversorgung) angeschaltet wird. Auch ist es nicht zwingend erforderlich, den elektrischen Antrieb 3 über einen Umrichter 4 zu speisen.

Im Falle eines hydraulischen bzw. pneumatischen Antriebs muss selbstverständlich der Umrichter 4 durch geeignete andere Stellglieder ersetzt werden, insbesondere durch Ventile. Unabhängig davon, welcher Art der Antrieb 3 ist (elektrisch, hydraulisch, pneumatisch) ist es möglich, dass das entsprechende Stellglied 4 (beispielsweise die einzelnen Halbleiterschalter des Umrichters 4) von der Steuereinrichtung 6 rein binär geschaltet werden. Je nach Ausgestaltung der Stellglieder ist es - insbesondere bei hydraulischen und pneumatischen Antrieben 3 - jedoch alternativ möglich, die Stellglieder proportional anzusteuern.

Die Maschine weist weiterhin eine Steuereinrichtung 6 auf. Die Steuereinrichtung 6 steuert die Maschine. Insbesondere steuert die Steuereinrichtung 6 - je nach Ausgestaltung der Maschine direkt oder indirekt über den Umrichter 4 - den elektrischen Antrieb 3 an. Weiterhin nimmt sie von mindestens einem Sensor 7 der Maschine ein von dem Sensor 7 erfasstes zeitabhängiges Signal S entgegen.

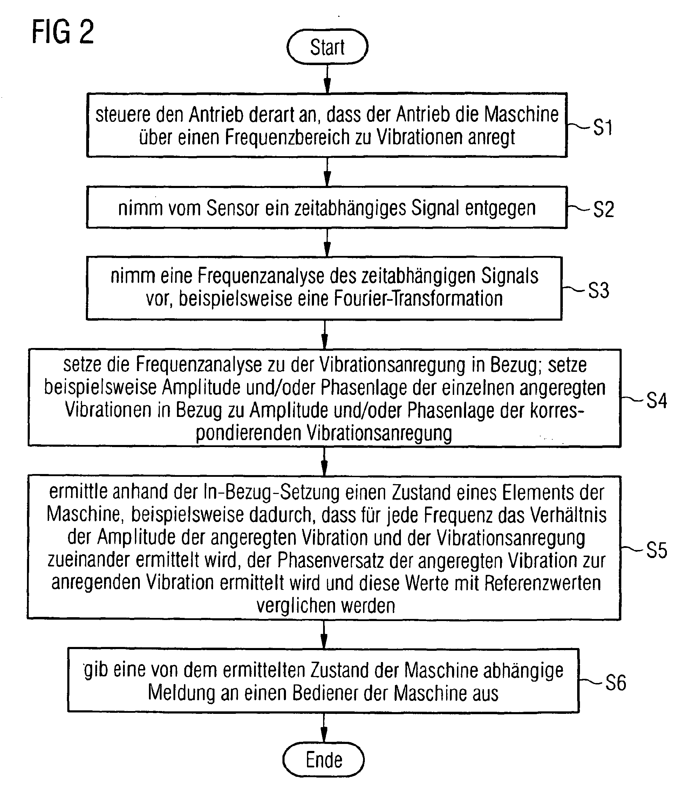

Die Steuereinrichtung 6 ist als softwareprogrammierbare Steuereinrichtung ausgebildet. Sie führt daher im Betrieb Maschinencode 8 eines Computerprogramms 9 aus, mit dem die Steuereinrichtung 6 programmiert ist. Der Maschinencode 8 ist somit von der Steuereinrichtung 6 unmittelbar ausführbar. Die Ausführung des Maschinencodes 8 bewirkt, dass die Steuereinrichtung 6 die Maschine gemäß einem Betriebsverfahren betreibt, das nachfolgend in Verbindung mit den FIG 2 bis 4 näher erläutert wird.

Das Computerprogramm 9 kann bereits bei der Herstellung der Steuereinrichtung 6 in der Steuereinrichtung 6 hinterlegt worden sein. Alternativ ist es möglich, das Computerprogramm 9 der Steuereinrichtung 6 über eine Rechner-Rechner-Verbindung zuzuführen. Die Rechner-Rechner-Verbindung ist in FIG 1 hierbei nicht dargestellt. Sie kann beispielsweise als Anbindung an ein LAN oder an das Internet ausgebildet sein. Wiederum alternativ ist es möglich, das Computerprogramm 9 in maschinenlesbarer Form auf einem Datenträger 10 zu speichern und das Computerprogramm 9 der Steuereinrichtung 6 über den Datenträger 10 zuzuführen. Die Ausgestaltung des Datenträgers 10 ist hierbei beliebiger Natur. Beispielsweise ist es möglich, dass der Datenträger 10 als USB-Memorystick oder als Speicherkarte ausgebildet ist. Dargestellt ist in FIG 1 eine Ausgestaltung des Datenträgers 10 als CD-ROM.

Der Betrieb der Maschine wird nachfolgend in Verbindung mit FIG 2 näher erläutert.

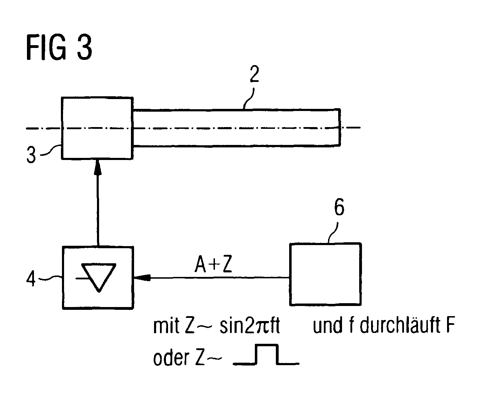

Gemäß FIG 2 schaltet die Steuereinrichtung 6 in einem Schritt S1 den Antrieb 3 über das Stellglied 4 derart an die Energieversorgung 5 an, dass der Antrieb 3 die Maschine über einen Frequenzbereich F zu Vibrationen anregt. Das Anregen zu den Vibrationen kann hierbei alternativ direkt oder indirekt erfolgen. Hierauf wird später in Verbindung mit den FIG 3 und 4 näher eingegangen werden.

In einem Schritt S2 nimmt die Steuereinrichtung 6 vom Sensor 7 das zeitabhängige Signal S entgegen. Das zeitabhängige Signal S wird hierbei selbstverständlich zuvor vom Sensor 7 erfasst und an die Steuereinrichtung 6 übermittelt.

Das Signal S ist für Vibrationen charakteristisch, die auf Grund der Ansteuerung des elektrischen Antriebs 3 im Schritt S1 angeregt wurden. Die Vibrationen weisen Frequenzen f auf, die mit denen des Frequenzbereichs F korrespondieren.

Das vom Sensor 7 erfasste Signal S muss für die Amplitude und/oder für die Phasenlage der angeregten Vibrationen charakteristisch sein. In der Regel ist das vom Sensor 7 erfasste Signal S sowohl für die Amplitude als auch für die Phasenlagen der angeregten Vibrationen charakteristisch. Der Sensor 7 kann zu diesem Zweck prinzipiell auf beliebige Weise ausgebildet sein, sofern er die gewünschte Sensitivität aufweist. Beispielsweise kann der Sensor 7 als Wegsensor, als Geschwindigkeitssensor, als Beschleunigungssensor, als Kraftsensor oder als Drucksensor ausgebildet sein.

In einem Schritt S3 nimmt die Steuereinrichtung 6 eine Frequenzanalyse des zeitabhängigen Signals S vor. Beispielsweise kann sie eine Fourier-Transformation vornehmen.

In einem Schritt S4 setzt die Steuereinrichtung 6 die Frequenzanalyse des Schrittes S3 zu der Vibrationsanregung in Bezug. Beispielsweise kann die Steuereinrichtung 6 Amplitude und/oder Phasenlage der einzelnen angeregten Vibrationen in Bezug zu Amplitude und/oder Phasenlage der korrespondierenden Vibrationsanregung setzen.

In einem Schritt S5 ermittelt die Steuereinrichtung 6 anhand der In-Bezug-Setzung des Schrittes S4 einen Zustand mindestens eines Elements der Maschine, beispielsweise der Welle 2, des Grundkörpers 1, des Antriebs 3 oder eines - in FIG 1 nicht dargestellten - Lagers der Welle 2 im Grundkörper 1.

Die Ermittlung des Zustands kann von der Steuereinrichtung 6 beispielsweise dadurch ermittelt werden, dass sie für jede Frequenz f das Verhältnis der Amplituden der angeregten Vibration und der Vibrationsanregung zueinander ermittelt, den Phasenversatz der angeregten Vibration zur anregenden Vibration ermittelt und diese Werte mit Referenzwerten vergleicht, die in der Steuereinrichtung 6 hinterlegt sind. Je nach Ergebnis des Vergleichs kann sodann auf den entsprechenden Zustand geschlossen werden.

In einem Schritt S6 gibt die Steuereinrichtung 6 eine Meldung M an einen Bediener 11 der Maschine aus. Die ausgegebene Meldung M ist hierbei von dem im Schritt S5 ermittelten Zustand der Maschine abhängig. Beispielsweise kann eine Warnmeldung, eine Alarmmeldung oder eine Meldung, dass alles in Ordnung ist, ausgegeben werden.

Zur Anregung der Vibrationen ist gemäß FIG 3 vorgesehen, den Antrieb 3 mit einer Störgröße Z zu beaufschlagen. Das Beaufschlagen mit der Störgröße Z erfolgt hierbei - direkt oder indirekt über den Umrichter 4 - durch die Steuereinrichtung 6. Diese Vorgehensweise hat den Vorteil, dass sie ausführbar ist, ohne Umbauten an der Maschine vornehmen zu müssen. Die Störgröße Z wird hierbei auf ein "normales" Ansteuersignal A des Antriebs 3 aufgeschaltet.

Die Störgröße Z weist mindestens eine Frequenz f auf, die innerhalb des Frequenzbereichs F liegt. Zu diesem Zweck sind zwei alternative Vorgehensweisen möglich. Zum einen ist es möglich, dass die Störgröße Z eine sinusförmige Störgröße ist, deren Frequenz f den Frequenzbereich F durchläuft. Alternativ ist es möglich, dass die Störgröße Z eine pseudobinäre Störgröße ist, deren Spektrum den Frequenzbereich F abdeckt.

Die vorliegende Erfindung weist viele Vorteile auf. Insbesondere reicht für die Beurteilung des Zustands der Maschine ein einfacher Beschleunigungssensor oder dergleichen aus. Weiterhin gibt das Übertragungsverhalten Auskunft über den Zustand des Gesamtsystems (= Maschine) und über den Zustand einzelner Komponenten 1 bis 3 des Systems. Zeitliche Variationen des Übertragungsverhaltens, die beispielsweise durch thermische oder mechanische Effekte verursacht sein können, können deutlich herausgearbeitet werden. Es ist möglich, den Zustand von Lagern zu ermitteln. Schließlich ist es möglich, das Übertragungsverhalten zur Optimierung von Komponenten der Maschine einzusetzen.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Betriebsverfahren für eine mittels eines Antriebs (3) angetriebene Maschine,
- wobei der Antrieb (3) von einer Steuereinrichtung (6) über mindestens ein Stellglied (4) an eine Energieversorgung (5) anschaltbar ist,
- wobei der Antrieb (3) in der Lage ist, beim Anschalten an die Energieversorgung (5) aus dem Stand anzulaufen,
- wobei der Antrieb (3) von der Steuereinrichtung (6) derart an die Energieversorgung (5) angeschaltet wird, dass der Antrieb (3) die Maschine direkt oder indirekt über einen Frequenzbereich (F) zu Vibrationen anregt,
- wobei mittels eines Sensors (7) ein zeitabhängiges Signal (S) erfasst wird, das für angeregte Vibrationen charakteristisch ist,
- wobei das zeitabhängige Signal (S) an die Steuereinrichtung (6) übermittelt wird,
- wobei von der Steuereinrichtung(6) eine Frequenzanalyse des zeitabhängigen Signals (S) vorgenommen wird,
- wobei die Frequenzanalyse von der Steuereinrichtung (6) zu der Vibrationsanregung in Bezug gesetzt wird und daraus ein Zustand mindestens eines Elements (1 - 3) der Maschine ermittelt wird,
- wobei von der Steuereinrichtung (6) in Abhängigkeit von dem ermittelten Zustand eine Meldung (M) an einen Bediener (11) der Maschine ausgegeben wird,
- wobei zur Vibrationsanregung der Antrieb (3) von der Steuereinrichtung (6) mit einer Störgröße (Z) beaufschlagt wird, die mindestens eine innerhalb des Frequenzbereichs (F) liegende Frequenz (f) aufweist,
- wobei die Störgröße (Z) eine sinusförmige Störgröße ist, deren Frequenz (f) den Frequenzbereich (F) durchläuft oder die Störgröße (Z) eine pseudobinäre Störgröße ist, deren Spektrum den Frequenzbereich (F) abdeckt.

2. Betriebsverfahren nach Anspruch 1, **dadurch gekennzeichnet, dass** der Antrieb (3) als elektrischer, hydraulischer oder pneumatischer Antrieb (3) ausgebildet ist.

3. Betriebsverfahren nach Anspruch 1 oder 2, **dadurch gekennzeichnet, dass** das mindestens eine Stellglied (4) von der Steuereinrichtung (6) nur binär geschaltet wird oder proportional angesteuert wird.

4. Betriebsverfahren nach Anspruch 1, 2 oder 3, **dadurch gekennzeichnet, dass** der Sensor (7) als Wegsensor, als Geschwindigkeitssensor, als Beschleunigungssensor, als Kraftsensor oder als Drucksensor ausgebildet ist.

5. Betriebsverfahren nach einem der obigen Ansprüche, **dadurch gekennzeichnet, dass** das vom Sensor (7) erfasste Signal (S) für die Amplitude und für die Phasenlage der angeregten Vibrationen charakteristisch ist.

6. Betriebsverfahren nach einem der obigen Ansprüche, **dadurch gekennzeichnet, dass** von der Steuereinrichtung (6) Amplitude und/oder Phasenlage der angeregten Vibrationen in Bezug zu Amplitude und/oder Phasenlage der Vibrationsanregung gesetzt werden und daraus der Zustand des mindestens einen Elements (1 - 3) der Maschine ermittelt wird.

7. Computerprogramm, wobei das Computerprogramm Maschinencode (8) umfasst, der von einer Steuereinrichtung (6) für eine mittels eines Antriebs (3) angetriebene Maschine unmittelbar ausführbar ist, wobei die Ausführung des Maschinencodes (8) bewirkt, dass die Steuereinrichtung (6)
- den Antrieb (3) derart über mindestens ein Stellglied (4) an eine Energieversorgung (5) anschaltet, dass der Antrieb (3) die Maschine direkt oder indirekt über einen Frequenzbereich (F) zu Vibrationen anregt,
- von einem Sensor (7) der Maschine ein zeitabhängiges Signal (S) entgegen nimmt, das für angeregte Vibrationen charakteristisch ist,
- eine Frequenzanalyse des zeitabhängigen Signals (S) vornimmt,
- die Frequenzanalyse zu der Vibrationsanregung in Bezug setzt und daraus einen Zustand mindestens eines Elements (1
- 3) der Maschine ermittelt,
- in Abhängigkeit von dem ermittelten Zustand eine Meldung (M) an einen Bediener (11) der Maschine ausgibt,
- zur Vibrationsanregung den Antrieb (3) mit einer Störgröße (Z) beaufschlagt, die mindestens eine innerhalb des Frequenzbereichs (F) liegende Frequenz (f) aufweist,
wobei die Störgröße (Z) eine sinusförmige Störgröße ist, deren Frequenz (f) den Frequenzbereich (F) durchläuft oder die Störgröße (Z) eine pseudobinäre Störgröße ist, deren Spektrum den Frequenzbereich (F) abdeckt.

8. Computerprogramm nach Anspruch 7, **dadurch gekennzeichnet, dass** die Ausführung des Maschinencodes (8) bewirkt, dass die Steuereinrichtung (6) zusätzlich die Verfahrensschritte des Anspruchs 6 ausführt.

9. Datenträger, auf dem in maschinenlesbarer Form ein Computerprogramm (9) nach Anspruch 7 oder 8 gespeichert ist.

10. Steuereinrichtung für eine mittels eines Antriebs (3) angetriebene Maschine, wobei die Steuereinrichtung mit einem Computerprogramm (9) nach Anspruch 7 programmiert ist, so dass sie in der Lage ist, im Betrieb
- den Antrieb (3) derart über mindestens ein Stellglied (4) an eine Energieversorgung (5) anzuschalten, dass der Antrieb (3) die Maschine direkt oder indirekt über einen Frequenzbereich (F) zu Vibrationen anregt,
- von einem Sensor (7) der Maschine ein zeitabhängiges Signal (S) entgegen zu nehmen, das für angeregte Vibrationen charakteristisch ist,
- eine Frequenzanalyse des zeitabhängigen Signals (S) vorzunehmen,
- die Frequenzanalyse zu der Vibrationsanregung in Bezug zu setzen und daraus einen Zustand mindestens eines Elements (1 - 3) der Maschine zu ermitteln,
- in Abhängigkeit von dem ermittelten Zustand eine Meldung (M) an einen Bediener (11) der Maschine auszugeben,
- zur Vibrationsanregung den Antrieb (3) mit einer Störgröße (Z) zu beaufschlagen, die mindestens eine innerhalb des Frequenzbereichs (F) liegende Frequenz (f) aufweist,
wobei die Störgröße (Z) eine sinusförmige Störgröße ist, deren Frequenz (f) den Frequenzbereich (F) durchläuft oder die Störgröße (Z) eine pseudobinäre Störgröße ist, deren Spektrum den Frequenzbereich (F) abdeckt.

11. Steuereinrichtung nach Anspruch 14, **dadurch gekennzeichnet, dass** das Computerprogramm (9) entsprechend Anspruch 8 ausgebildet ist, so dass die Steuereinrichtung in der Lage ist, im Betrieb zusätzlich die Verfahrensschritte des Anspruchs 6 auszuführen.

12. Maschine,
- wobei die Maschine einen Antrieb (3), eine Steuereinrichtung (6) und einen Sensor (7) aufweist,
- wobei die Maschine mittels des Antriebs (3) antreibbar ist,
- wobei der Antrieb (3) von der Steuereinrichtung (6) über mindestens ein Stellglied (4) an eine Energieversorgung (5) anschaltbar ist, so dass der elektrische Antrieb (3) die Maschine direkt oder indirekt über einen Frequenzbereich (F) zu Vibrationen anregt,
- wobei der Antrieb (3) in der Lage ist, beim Anschalten an die Energieversorgung (5) aus dem Stand anzulaufen,
- wobei mittels des Sensors (7) ein zeitabhängiges Signal (S) erfassbar und an die Steuereinrichtung (6) übermittelbar ist, das für angeregte Vibrationen charakteristisch ist,
- wobei von der Steuereinrichtung (6) eine Frequenzanalyse des zeitabhängigen Signals (S) vornehmbar ist, die Frequenzanalyse zu der Vibrationsanregung in Bezug setzbar ist, daraus ein Zustand mindestens eines Elements (1 - 3) der Maschine ermittelbar ist und in Abhängigkeit von dem ermittelten Zustand eine Meldung (M) an einen Bediener (1) der Maschine ausgebbar ist,
- wobei zur Vibrationsanregung der Antrieb (3) von der Steuereinrichtung (6) mit einer Störgröße (Z) beaufschlagbar ist, die mindestens eine innerhalb des Frequenzbereichs (F) liegende Frequenz (f) aufweist,
- wobei die Störgröße (Z) eine sinusförmige Störgröße ist, deren Frequenz (f) den Frequenzbereich (F) durchläuft oder die Störgröße (Z) eine pseudobinäre Störgröße ist, deren Spektrum den Frequenzbereich (F) abdeckt.

13. Maschine nach Anspruch 12, **dadurch gekennzeichnet, dass** die Steuereinrichtung (6) derart ausgebildet ist, dass sie in der Lage ist, im Betrieb zusätzlich die Verfahrensschritte des Anspruchs 6 auszuführen.

14. Maschine nach Anspruch 12 oder 13, **dadurch gekennzeichnet, dass** der Antrieb (3) als elektrischer, hydraulischer oder pneumatischer Antrieb (3) ausgebildet ist.

15. Maschine nach Anspruch 12, 13 oder 14, **dadurch gekennzeichnet, dass** das mindestens eine Stellglied (4) von der Steuereinrichtung (6) nur binär geschaltet wird oder proportional angesteuert wird.

## Claims

1. Operating method for a machine which is driven using a drive (3),
- the drive (3) being able to be connected to a power supply (5) via at least one actuator (4) by a control device (6),
- the drive (3) being able to start up from a standstill when connected to the power supply (5),
- the control device (6) connecting the drive (3) to the power supply (5) in such a manner that the drive (3) directly or indirectly excites the machine to vibrate over a frequency range (F),
- a sensor (7) being used to detect a time-dependent signal (S) which is characteristic of excited vibrations,
- the time-dependent signal (S) being transmitted to the control device (6),
- the control device (6) analyzing the frequency of the time-dependent signal (S),
- the control device (6) relating the frequency analysis to the vibrational excitation and using this to determine a state of at least one element (1-3) of the machine,
- the control device (6) outputting a message (M) to an operator (11) of the machine on the basis of the state determined,
- the control device (6) applying an interference variable (Z), which has at least one frequency (f) inside the frequency range (F), to the drive (3) in order to excite vibrations,
- the interference variable (Z) being a sinusoidal interference variable whose frequency (f) passes through the frequency range (F), or the interference variable (Z) being a pseudobinary interference variable whose spectrum covers the frequency range (F).

2. Operating method according to Claim 1, **characterized in that** the drive (3) is in the form of an electrical, hydraulic or pneumatic drive (3).

3. Operating method according to Claim 1 or 2, **characterized in that** the at least one actuator (4) is switched by the control device (6) only in binary fashion or is driven in a proportional manner.

4. Operating method according to Claim 1, 2 or 3, **characterized in that** the sensor (7) is in the form of a displacement sensor, a velocity sensor, an acceleration sensor, a force sensor or a pressure sensor.

5. Operating method according to one of the preceding claims, **characterized in that** the signal (S) detected by the sensor (7) is characteristic of the amplitude and the phase angle of the excited vibrations.

6. Operating method according to one of the preceding claims, **characterized in that** the control device (6) relates the amplitude and/or phase angle of the excited vibrations to the amplitude and/or phase angle of the vibrational excitation and uses this to determine the state of the at least one element (1-3) of the machine.

7. Computer program, the computer program comprising machine code (8) which can be directly executed by a control device (6) for a machine which is driven using a drive (3), the execution of the machine code (8) causing the control device (6)
- to connect the drive (3) to a power supply (5) via at least one actuator (4) in such a manner that the drive (3) directly or indirectly excites the machine to vibrate over a frequency range (F),
- to receive a time-dependent signal (S) which is characteristic of excited vibrations from a sensor (7) of the machine,
- to analyze the frequency of the time-dependent signal (S),
- to relate the frequency analysis to the vibrational excitation and to use this to determine a state of at least one element (1-3) of the machine,
- to output a message (M) to an operator (11) of the machine on the basis of the state determined,
- to apply an interference variable (Z), which has at least one frequency (f) inside the frequency range (F), to the drive (3) in order to excite vibrations,
the interference variable (Z) being a sinusoidal interference variable whose frequency (f) passes through the frequency range (F), or the interference variable (Z) being a pseudobinary interference variable whose spectrum covers the frequency range (F) .

8. Computer program according to Claim 7, **characterized in that** the execution of the machine code (8) causes the control device (6) to additionally carry out the method steps in Claim 6.

9. Data storage medium on which a computer program (9) according to Claim 7 or 8 is stored in machine-readable form.

10. Control device for a machine which is driven using a drive (3), the control device being programmed with a computer program (9) according to Claim 7 such that it is able, during operation,
- to connect the drive (3) to a power supply (5) via at least one actuator (4) in such a manner that the drive (3) directly or indirectly excites the machine to vibrate over a frequency range (F),
- to receive a time-dependent signal (S) which is characteristic of excited vibrations from a sensor (7) of the machine,
- to analyze the frequency of the time-dependent signal (S),
- to relate the frequency analysis to the vibrational excitation and to use this to determine a state of at least one element (1-3) of the machine,
- to output a message (M) to an operator (11) of the machine on the basis of the state determined,
- to apply an interference variable (Z), which has at least one frequency (f) inside the frequency range (F), to the drive (3) in order to excite vibrations,
the interference variable (Z) being a sinusoidal interference variable whose frequency (f) passes through the frequency range (F), or the interference variable (Z) being a pseudobinary interference variable whose spectrum covers the frequency range (F).

11. Control device according to Claim 14, **characterized in that** the computer program (9) according to Claim 8 is designed in such a manner that the control device is able to additionally carry out the method steps in Claim 6 during operation.

12. Machine,
- the machine having a drive (3), a control device (6) and a sensor (7),
- the machine being able to be driven using the drive (3),
- the drive (3) being able to be connected to a power supply (5) via at least one actuator (4) by the control device (6), with the result that the electrical drive (3) directly or indirectly excites the machine to vibrate over a frequency range (F),
- the drive (3) being able to start up from a standstill when connected to the power supply (5),
- a time-dependent signal (S) which is characteristic of excited vibrations being able to be detected using the sensor (7) and being able to be transmitted to the control device (6),
- the control device (6) being able to analyze the frequency of the time-dependent signal (S), being able to relate the frequency analysis to the vibrational excitation, being able to use this to determine a state of at least one element (1-3) of the machine, and being able to output a message (M) to an operator (11) of the machine on the basis of the state determined,
- the control device (6) being able to apply an interference variable (Z), which has at least one frequency (f) inside the frequency range (F), to the drive (3) in order to excite vibrations,
- the interference variable (Z) being a sinusoidal interference variable whose frequency (f) passes through the frequency range (F), or the interference variable (Z) being a pseudobinary interference variable whose spectrum covers the frequency range (F).

13. Machine according to Claim 12, **characterized in that** the control device (6) is designed in such a manner that it is able to additionally carry out the method steps in Claim 6 during operation.

14. Machine according to Claim 12 or 13, **characterized in that** the drive (3) is in the form of an electrical, hydraulic or pneumatic drive (3).

15. Machine according to Claim 12, 13 or 14, **characterized in that** the at least one actuator (4) is switched by the control device (6) only in binary fashion or is driven in a proportional manner.

## Revendications

1. Procédé pour faire fonctionner une machine entraînée au moyen d'un entraînement ( 3 ),
- dans lequel l'entraînement ( 3 ) peut être branché par un dispositif ( 6 ) de commande sur une alimentation ( 5 ) en énergie par l'intermédiaire d'au moins un élément ( 4 ) de réglage,
- dans lequel l'entraînement ( 3 ) est en mesure, lors du branchement sur l'installation ( 5 ) d'énergie, de se mettre en marche à partir de l'arrêt,
- dans lequel l'entraînement ( 3 ) est branché par le dispositif ( 6 ) de commande sur l'alimentation ( 5 ) en énergie, de manière à ce que l'entraînement ( 3 ) excite en vibrations la machine directement ou indirectement sur un domaine ( F ) de fréquence,
- dans lequel on détecte au moyen d'un capteur ( 7 ) un signal ( S ), qui dépend du temps et qui est caractéristique des vibrations excitées,
- dans lequel on transmet le signal ( S ) qui dépend du temps au dispositif ( 6 ) de commande,
- dans lequel une analyse de fréquence du signal qui dépend du temps est effectuée par le dispositif ( 6 ) de commande,
- dans lequel l'analyse de fréquence par le dispositif ( 6 ) de commande est mise en relation avec l'excitation de vibrations et il en est déterminé un état d'au moins un élément ( 1 à 3 ) de la machine,
- dans lequel il est envoyé, par le dispositif ( 6 ) de commande, en fonction de l'état déterminé, un message ( M ) à l'opérateur ( 11 ) de la machine,
- dans lequel, pour l'excitation en Vibration, l'entraînement ( 3 ) est soumis par le dispositif ( 6 ) de commande à une grandeur ( Z ) de perturbation, qui a au moins une fréquence ( f ) se trouvant dans le domaine ( F ) de fréquence,
- dans lequel la grandeur ( Z ) de perturbation est une grandeur de perturbation sinusoïdale, dont la fréquence ( f ) traverse le domaine ( F ) de fréquence ou la grandeur ( Z ) de perturbation est une grandeur de perturbation pseudobinaire, dont le spectre recouvre le domaine ( F ) de fréquence.

2. Procédé suivant la revendication 1, **caractérisé en ce que** l'entraînement ( 3 ) est constitué sous la forme d'un entraînement ( 3 ) électrique, hydraulique ou pneumatique.

3. Procédé suivant la revendication 1 ou 2, **caractérisé en ce que** le au moins un élément ( 4 ) de réglage n'est branché que binairement ou est commandé proportionnellement par le dispositif ( 6 ) de commande.

4. Procédé suivant la revendication 1, 2 ou 3, **caractérisé en ce que** le capteur ( 7 ) est constitué sous la forme d'un capteur de trajet, sous la forme d'un capteur de vitesse, sous la forme d'un capteur d'accélération, sous la forme d'un capteur de force ou sous la forme d'un capteur de pression.

5. Procédé suivant l'une des revendications précédentes, **caractérisé en ce que** le signal ( S ) détecté par le capteur ( 7 ) est caractéristique de l'amplitude et de la position en phase des vibrations excitées.

6. Procédé suivant l'une des revendications précédentes, **caractérisé en ce que** le dispositif ( 6 ) de commande met l'amplitude et/ou la position en phase des vibrations excitées en rapport avec l'amplitude et/ou la position en phase de l'excitation en vibration et en détermine l'état du au moins un élément ( 1 à 3 ) de la machine.

7. Programme informatique, le programme informatique comprenant un code ( 8 ) machine, qui peut être réalisé notamment par un dispositif ( 6 ) de commande d'une machine entraînée au moyen d'un entraînement ( 3 ), la réalisation du code machine ( 8 ) faisant que le dispositif ( 6 ) de commande
- branche l'entraînement ( 3 ) sur une alimentation ( 5 ) en énergie par l'intermédiaire d'au moins un élément ( 4 ) de réglage, de manière à ce que l'entraînement ( 3 ) excite en vibrations la machine directement ou indirectement sur un domaine ( F ) de fréquence,
- reçoit d'un capteur ( 7 ) de la machine un signal ( S ), qui dépend du temps et qui est caractéristique des vibrations excitées,
- effectue une analyse de fréquence du signal ( S ) qui dépend du temps,
- met l'analyse de fréquence en rapport avec l'excitation des vibrations et en détermine un état d'au moins un élément ( 1 à 3 ) de la machine,
- envoie en fonction de l'état déterminé un message ( M ) à un opérateur ( 11 ) de la machine,
- pour l'excitation en vibration, soumet l'entraînement ( 3 ) à une grandeur ( Z ) de perturbation, qui a au moins une fréquence ( f ) se trouvant dans le domaine ( F ) de fréquence,
dans lequel la grandeur ( Z ) de perturbation est une grandeur de perturbation sinusoïdale, dont la fréquence ( f ) traverse le domaine ( F ) de fréquence ou la grandeur ( Z ) de perturbation est une grandeur de perturbation pseudobinaire, dont le spectre recouvre le domaine ( F ) de fréquence.

8. Programme informatique suivant la revendication 7, **caractérisé en ce que** la réalisation du code machine ( 8 ) fait que le dispositif ( 6 ) de commande exécute supplémentairement les stades du procédé de la revendication 6.

9. Support de données, sur lequel est mémorisé sous une forme pouvant être lue par une machine un programme ( 9 ) informatique suivant la revendication 7 ou 8.

10. Dispositif de commande d'une machine entraînée au moyen d'un entraînement ( 3 ), le dispositif de commande étant programmé par un programme ( 9 ) informatique suivant la revendication 7, de manière à être en mesure, en fonctionnement,
- de brancher l'entraînement ( 3 ) sur une alimentation ( 5 ) en énergie par l'intermédiaire d'au moins un élément ( 4 ) de réglage, de manière à ce que l'entraînement ( 3 ) excite en des vibrations la machine directement ou indirectement sur un domaine ( F ) de fréquence,
- de recevoir d'un capteur ( 7 ) de la machine un signal ( S ) qui dépend du temps et qui est caractéristique des vibrations excitées,
- d'effectuer une analyse de fréquence du signal ( S ) qui dépend du temps,
- de mettre l'analyse de fréquence en rapport avec l'excitation en vibration et d'en déterminer l'état d'au moins un élément ( 1 à 3 ) de la machine,
- d'envoyer en fonction de l'état déterminé un message ( M ) à un opérateur ( 11 ) de la machine,
- de soumettre pour l'excitation en vibration l'entraînement ( 3 ) à une grandeur de perturbation, qui a au moins une fréquence ( f ) se trouvant dans le domaine ( F ) de fréquence,
dans lequel la grandeur ( Z ) de perturbation est une grandeur de perturbation sinusoïdale, dont la fréquence ( f ) traverse le domaine ( F ) de fréquence ou la grandeur ( Z ) de perturbation est une grandeur de perturbation pseudobinaire, dont le spectre recouvre le domaine ( F ) de fréquence.

11. Dispositif de commande suivant la revendication 14, **caractérisé en ce que** le programme ( 9 ) informatique est constitué conformément à la revendication 8, de sorte que le dispositif de commande est en mesure d'exécuter en fonctionnement supplémentairement les stades de procédé de la revendication 6.

12. Machine,
- dans laquelle la machine comporte un entraînement ( 3 ), un dispositif ( 6 ) de commande et un capteur ( 7 ),
- dans laquelle la machine peut être entraînée au moyen de l'entraînement ( 3 ),
- dans laquelle l'entraînement ( 3 ) peut être branché par le dispositif ( 6 ) de commande sur une alimentation ( 5 ) en énergie par l'intermédiaire d'au moins un élément ( 4 ) de réglage, de manière à ce que l'entraînement ( 3 ) électrique excite en vibrations la machine directement ou indirectement sur un domaine ( F ) de fréquence,
- dans laquelle l'entraînement ( 3 ) est en mesure, lors du branchement sur l'alimentation ( 5 ) en énergie, de se mettre en marche à partir de l'arrêt,
- dans laquelle, au moyen du capteur ( 7 ), un signal ( S ) qui dépend du temps peut être détecté et peut être transmis au dispositif ( 6 ) de commande, signal qui est caractéristique des vibrations excitées,
- dans laquelle il peut être effectué par le dispositif ( 6 ) de commande une analyse de fréquence du signal ( S ) qui dépend du temps, l'analyse de fréquence peut être mise en rapport avec l'excitation en vibration, un état d'au moins un élément ( 1 à 3 ) de la machine peut en être déterminé et en fonction de l'état déterminé, un message ( M ) peut être envoyé à un opérateur ( 1 ) de la machine,
- dans laquelle, pour l'excitation en vibration, l'entraînement ( 3 ) peut être soumis par le dispositif ( 6 ) de commande à une grandeur ( Z ) de perturbation, qui a au moins une fréquence ( f ) se trouvant dans le domaine ( F ) de fréquence,
- dans laquelle la grandeur ( Z ) de perturbation est une grandeur de perturbation sinusoïdale, dont la fréquence ( f ) traverse le domaine ( F ) de fréquence ou la grandeur ( Z ) de perturbation est une grandeur de perturbation pseudobinaire, dont le spectre recouvre le domaine ( F ) de fréquence.

13. Machine suivant la revendication 12, **caractérisée en ce que** le dispositif ( 6 ) de commande est constitué de manière à être en mesure d'exécuter en fonctionnement supplémentairement les stades de procédé suivant la revendication 6.

14. Machine suivant la revendication 12 ou 13, **caractérisée en ce que** l'entraînement ( 3 ) est constitué sous la forme d'un entraînement ( 3 ) électrique, hydraulique ou pneumatique.

15. Machine suivant la revendication 12, 13 ou 14, **caractérisée en ce que** le au moins un élément ( 4 ) de réglage est monté seulement binairement ou est commandé proportionnellement par le dispositif ( 6 ) de commande.
